# EUROPÄISCHE PATENTSCHRIFT

(11) **EP 3 597 943 B1**
(45) Veröffentlichungstag und Bekanntmachung des Hinweises auf die Patenterteilung: **17.02.2021**
(21) Anmeldenummer: 19172694.2
(22) Anmeldetag: 22.07.2014
(51) Int. Cl.: F16B 5/02

(54) **VERFAHREN ZUM VERBINDEN VON BAUTEILEN SOWIE BAUGRUPPE**
METHOD FOR CONNECTING COMPONENTS AND MODULE
PROCÉDÉ DE RACCORDEMENT DES COMPOSANTS AINSI QUE MODULE

(30) Priorität: 21.08.2013 DE 102013109036
(43) Veröffentlichungstag der Anmeldung: 22.01.2020
(62) Teilanmeldung aus: 14771765.6
(73) Patentinhaber: Schmidt, Heiko, 93138 Lappersdorf (DE)
(72) Erfinder: Schmidt, Heiko, 93138 Lappersdorf (DE)
(74) Vertreter: Glück Kritzenberger Patentanwälte PartGmbB

(56) Entgegenhaltungen:
- EP-A1- 0 754 602
- DE-C1- 3 620 005
- DE-U1-202007 008 643
- GB-A- 2 316 457
- US-B1- 6 932 044

## Beschreibung

Die Erfindung bezieht sich auf ein Verfahren gemäß Oberbegriff Patentanspruch 1. Speziell auch im Fahrzeugbau ist es vielfach erforderlich, wenigstens zwei aus Flachmaterial, d.h. aus Stahlblech hergestellte Bauteile, z.B. Karosserieteile, in einem vorgegebenen Abstand voneinander miteinander zu verbinden bzw. zu verspannen.

Bekannt ist hierfür eine Spann- und Befestigungsvorrichtung, die aus einer an der Außenseite eines ersten Bauteils anliegenden Spannmutter, aus einem an der Außenseite eines zweiten Bauteils anliegenden und in die Spannmutter eingreifenden Spannbolzens und aus einem axial einstellbaren Abstandhalter bestehen, der von einer sich an der Innenfläche des ersten Bauteils abstützenden Gewindehülse und von einer Trommelmutter gebildet ist, die mit einem Außengewinde in das Innengewinde der Gewindehülse eingreift und gegen die Innenfläche des zweiten Bauteils anliegt. Die Trommelmutter und die Gewindehülse weisen ein Linksgewinde auf. Die Trommelmutter ist über eine Mitnehmerhülse mit dem Spannbolzen zur Übertragung eines begrenzten Drehmomentes verbunden, sodass beim Drehen des Spannbolzens durch Mitdrehen der Trommelmutter zunächst der Abstand zwischen den Bauteilen eingestellt und dann bei Erreichen eines geforderten Abstandes eine weitere Abstandsvergrößerung zwischen diesen Bauteilen und ein Mitdrehen der Trommelmutter mit dem Spannbolzen verhindert sind und über den in die Spannmutter zunehmend eingreifenden Spannbolzen das Verspannen der Bauteile erfolgt. Nachteilig bei der bekannten Spann- und Befestigungsvorrichtung ist allerdings, dass durch hakenartige in das erste Bauteil eingreifende Abschnitte die Gewindehülse am ersten Bauteil fixiert werden muss und außerdem die Spannmutter als Einzelteil auf den die Öffnungen in den Bauteilen sowie im Abstandhalter durchgreifenden Spannbolzen aufgesetzt und beim Spannen mit einem geeigneten Werkzeug gegen Mitdrehen mit dem Spannbolzen gesichert werden muss. Das Dokument EP 0 754 602 A zeigt ein Befestigungsverfahren nach dem Stand der Technik.

Aufgabe der Erfindung ist es, ein Verfahren aufzuzeigen, welches unter Vermeidung der Nachteile bekannter Spann- und/oder Befestigungsvorrichtungen ein Befestigen und/oder Verspannen von Bauteilen ermöglicht. Zur Lösung dieser Aufgabe ist ein Verfahren entsprechend dem Patentanspruch 1 ausgebildet.

Bei einer Ausführungsform des erfindungsgemäßen Verfahrens wird ein Funktionselement vorzugsweise in Form eines Verbindungselementes an einer Fügeöffnung eines Bauteils durch bleibende Verformung eines Nietbundes in einen verformten Nietbund unter Verwendung eines zusätzlichen Halterings fixiert, und zwar dadurch, dass der das Bauteil im Bereich der Fügeöffnung durchgreifende Nietbund auch in eine Ringöffnung des Halterings eingeführt und dort in den einen Hinterschnitt des Halterings hintergreifenden Nietbund verformt wird. Der Haltering reicht mit einem Bund oder Abschnitt in die Fügeöffnung hinein. Die Fügeöffnung weist einen Querschnitt auf, der größer ist als der Außenquerschnitt des Bundes oder Abschnitts, sodass die von dem Funktionselement und dem Haltering gebildete und am Bauteil fixierte Anordnung für einen seitlichen oder radialen Toleranzausgleich in der Fügeöffnung radial zu deren Achse bewegbar ist. Um eine Verdrehungssicherung des Funktionselementes in der Fügeöffnung zu erreichen, ist Letztere mit einem von der Kreisform abweichenden Querschnitt ausgebildet. Ebenso weist der in die Fügeöffnung hineinreichende Abschnitt eine von der Kreisform abweichende Umfangskontur auf. Ein die Fügeöffnung umgebender Bereich des Bauelementes ist zwischen dem Funktionselement und dem Haltering aufgenommen.

Der Ausdruck "im Wesentlichen" bzw. "etwa" bzw. "ca." bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

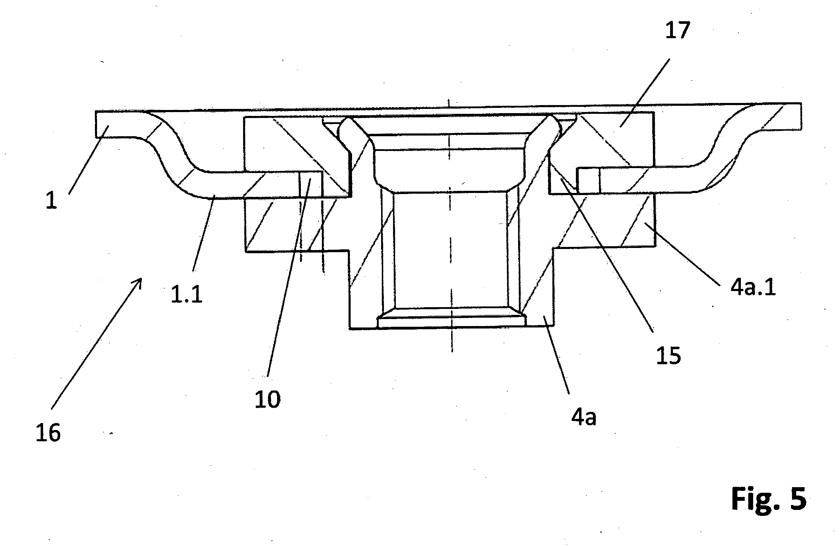

Die Erfindung wird im Folgenden anhand der Figuren an Ausführungsbeispielen näher erläutert, wobei nur Figur 5 das Ergebnis der Ausführung des erfindungsgemäßen Verfahrens zeigt. Es zeigen:

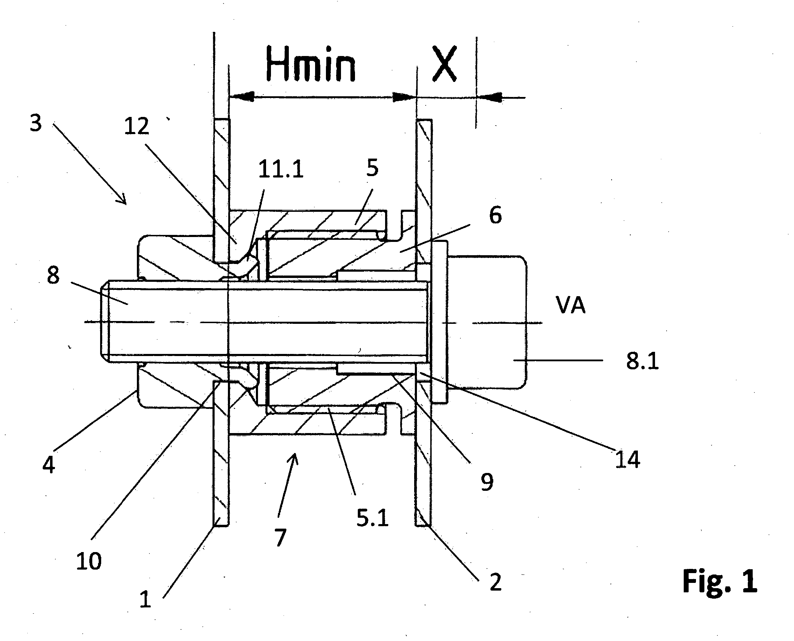

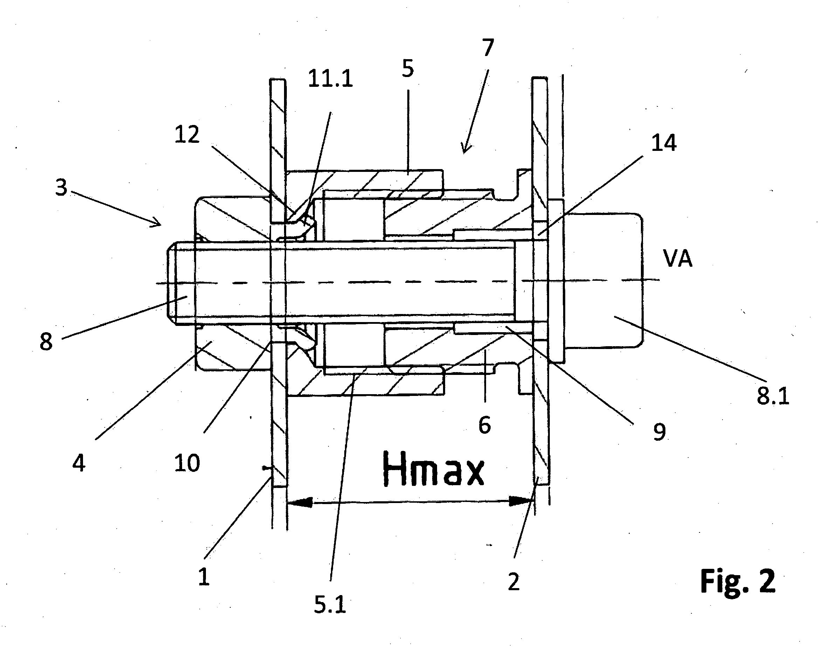

Fig. 1 und 2 jeweils in vereinfachter Schnittdarstellung und in unterschiedlichem Zustand eine Vorrichtung zum gegenseitigen Verspannen von zwei Bauteilen mit unterschiedlichem Abstand bzw. mit Toleranzausgleich;
Fig. 3 in schematischer Darstellung verschiedene Verfahrensschritte zur Befestigung einer Spannmutter sowie einer Gewindehülse der Vorrichtung der Figuren 1 und 2 an einem der Bauteile;
Fig. 4 in vereinfachter Schnittdarstellung die Spannmutter sowie die Gewindehülse bei einer erfindungsgemäßen Vorrichtung mit seitlichen bzw. radialen Toleranzausgleich;
Fig. 5 in vereinfachter Darstellung und im Schnitt eine Spannmutter für einen seitlichen bzw. radialen Toleranzausgleich.

In den Figuren sind 1 und 2 zwei Bauteile, die bei der dargestellten Ausführungsform aus einem metallischen Flachmaterial, beispielsweise aus Stahlblech hergestellt und z.B. Teile einer Fahrzeugkarosserie sind. Die Bauteile 1 und 2 sind über wenigstens eine Vorrichtung 3 miteinander verspannt sind, und zwar derart, dass sie einen vorgegebenen Abstand H voneinander aufweisen. Näher im Detail ist die Vorrichtung 3 so ausgebildet, dass die Bauteile 1 und 2 mit einem gegenseitigen Abstand H verspannt werden können, der je nach Erfordernis im Bereich zwischen einem minimalen Abstand Hmin und einem maximalen Abstand Hmax liegt, der Abstand H also um den Betrag X eingestellt werden kann, insbesondere auch für einen axialen Toleranzausgleich, d.h. für einen Toleranzausgleich in Richtung der Achse VA der Vorrichtung 3.

Im Detail umfasst die Vorrichtung 3 eine Spannmutter 4, eine mit einem Innengewinde versehene Gewindebuchse oder Gewindehülse 5 mit Innengewinde 5.1, eine Trommelmutter 6, die mit ihrem Außengewinde in das Innengewinde 5.1 der Gewindehülse 5 eingreift und zusammen mit der Gewindehülse einen axial einstellbaren Abstandhalter 7 bildet, sowie einen Spann- oder Gewindebolzen 8 mit Kopf 8.1, der (Gewindebolzen) in das Innengewinde der Spannmutter 4 eingreift. Die Spannmutter 4, die Gewindehülse 5, die Trommelmutter 6 und der Gewindebolzen 8 sind bei montierter Vorrichtung 3 achsgleich mit einander und mit der Achse VA angeordnet. Zwischen dem durch die Öffnung der Trommelmutter 6 hindurchreichenden Spannbolzen 8 ist eine beispielsweise aus Kunststoff gefertigte Mitnehmerhülse 9 vorgesehen, die in der nachstehend noch näher beschriebenen Weise beim Drehen des Gewindebolzens 8 um die Achse VA zunächst ein Mitdrehen der Trommelmutter 6 bewirkt, bevor über den Gewindebolzen das Verspannen der Bauteile 1 und 2 erfolgt. Das Außengewinde des Gewindebolzens 8 sowie das Innengewinde der Spannmutter 4, einerseits und das Innengewinde 5.1 der Gewindehülse 5 und das mit diesem Innengewinde zusammenwirkende Außengewinde der Trommelmutter 6, andererseits sind gegenläufige Gewinde, d.h. das Außengewinde des Gewindebolzens 8 sowie das Innengewinde der Spannmutter 4 sind beispielsweise Rechtsgewinde, während das Innengewinde 5.1 der Gewindehülse 5 und das mit diesem Innengewinde zusammenwirkende Außengewinde der Trommelmutter 6 Linksgewinde sind.

Die Spannmutter 3 und die Gewindehülse 5 sind an dem Bauteil 1 in einer dortigen Fügeöffnung 10 dadurch befestigt, dass ein an der Spannmutter 5 vorgesehener, hülsenartiger und die Fügeöffnung 10 durchgreifender Nietbund 11 durch verbleibende Verformung, d.h. als radial verformter Nietbund 11.1 gegen einen im Inneren der Gewindehülse 5 gebildete Hinterschnitt 12 umgelegt ist. Zur Bildung des Hinterschnitts 12 ist die Öffnung der Gewindehülse 5 so ausgeführt, dass sie sich zu der gegen das Bauteil 1 anliegenden Stirnseite der Gewindehülse 5 im Querschnitt verengt, und zwar außerhalb des Innengewindes 5.1.

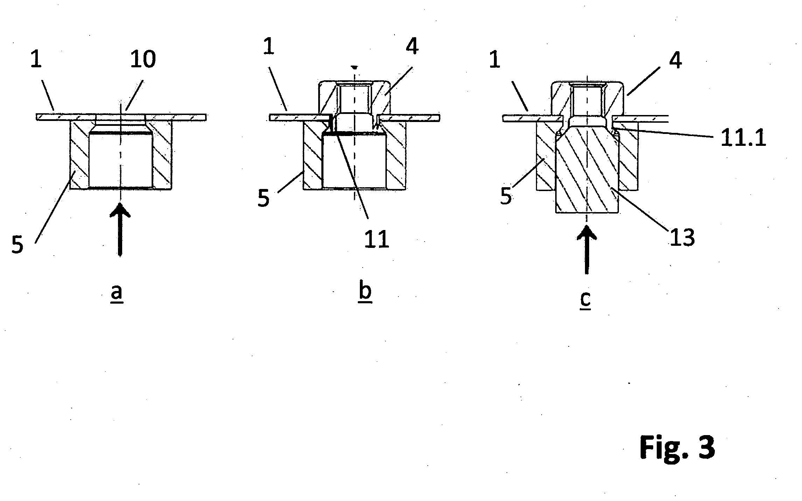

Die Figur 3 zeigt wesentliche Verfahrensschritte zum Verbinden des Bauteils 1 mit der Spannmutter 4 und der Gewindehülse 5, d.h. es wird zunächst die Gewindehülse 5 so am Bauteil 1 im Bereich der Fügeöffnung 10 positioniert, dass die Öffnung der Gewindehülse 5 deckungsgleich oder im Wesentlichen deckungsgleich mit der Fügeöffnung 10 angeordnet ist (Position a). Anschließend wird von der Gewindehülse 5 abgewandten Seite her die Spannmutter 4 mit ihrem Nietbund 11 in die Fügeöffnung und durch diese auch in die Gewindehülse 5 eingesetzt (Position b). Mit einem geeigneten stempelartigen und in die Gewindehülse 5 eingeführten Werkzeug 13 wird dann der unverformte Nietbund 11 in den verformten Nietbund 11.1, der den Hinterschnitt 12 hintergreift, wodurch die Spannmutter 4 und die Gewindehülse 5 am Bauteil 1 unverlierbar fixiert sind. Im Anschluss daran wird beispielsweise die Trommelmutter 6 in die Gewindehülse 5 eingedreht, und zwar vollständig oder im Wesentlichen vollständig, d.h. z.B. so weit, bis das eine Ende der Trommelmutter 6 gegen den Hinterschnitt 12 oder den umgelegten Nietbund 11.1 zur Anlage kommt. Die Trommelmutter 6 ist dabei bereits mit der Hülse 9 vormontiert. Im Anschluss daran wird das Bauteil 2 aufgesetzt, sodass es gegen die aus der Gewindehülse 5 vorstehende Stirnseite der Trommelhülse 6 anliegt, und der Gewindebolzen 8 wird dann von der der Spannmutter 4 abgewandten Seite durch eine Öffnung 14 des Bauteils 2 zumindest in die Trommelmutter 6 eingeführt und im Sinne eines Eindrehens in die Spannmutter 4 gedreht. Hierbei erfolgt zunächst über die Mitnehmerhülse 9 ein Mitdrehen der Trommelmutter 6 in der Weise, dass diese aufgrund der Linksgewinde der Trommelmutter 6 und der Gewindehülse 5 zunehmend aus der Gewindehülse 5 herausbewegt wird und hierdurch auch der Abstand H zwischen den Bauteilen 1 und 2 solange vergrößert wird, bis der geforderte endgültige Abstand H erreicht ist und eine weitere Abstandsänderung zwischen den Bauteilen 1 und 2 nicht mehr möglich ist, beispielsweise durch nicht dargestellte, den endgültigen Abstand fixierende Elemente oder Bauteile. Das weitere Drehen des Gewindebolzens 8 bewirkt dann ein zunehmendes Eindrehen des Gewindebolzens 8 in die Spannmutter 4 und schließlich ein festes Verspannen der Bauteile 1 und 2 dadurch, dass die sich gegen das Bauteil 1 abstützende Gewindehülse 5 und die sich gegen das Bauteil 1 abstützende Trommelmutter 6 einen starren Abstandhalter zwischen dem Bauteilen 1 und 2 bilden und beide Bauteile 1 und 2 an ihren einander abgewandten Seiten durch den Spannbolzen 8 bzw. dessen Kopfstück 8 und die Spannmutter 4 fest miteinander verspannt sind.

Die besondere Vorteile der Vorrichtung 3 bestehen darin, dass die Spannmutter 4 und die Gewindehülse 5 mit der Trommelmutter 6 am Bauteil 1 vormontiert werden können und die Einstellung des erforderlichen Abstandes H zwischen den Bauteilen 1 und 2 sowie das Verspannen dieser Bauteile 1 und 2 allein durch Einsetzen und Drehen des Spannbolzens 8 vom Bauteil 2 her erfolgen. Insbesondere ist es daher auch möglich, die Spannmutter 4 an einer später bei dem Verspannen der beiden Bauteile 1 und 2 nicht mehr oder nur schwer zugänglichen Position vorzusehen. Die das Verspannen der Bauteile 1 und 2 bewirkenden Kräfte wirken also ausschließlich über den mit seinem Kopfstück am Bauteil 2 anliegenden Spannbolzen 8 und über die am Bauteil 1 anliegende Spannmutter 4 sowie über den einstellbaren starren Abstandhalter, der von der Gewindehülse 5 und der Trommelmutter 6 gebildet ist.

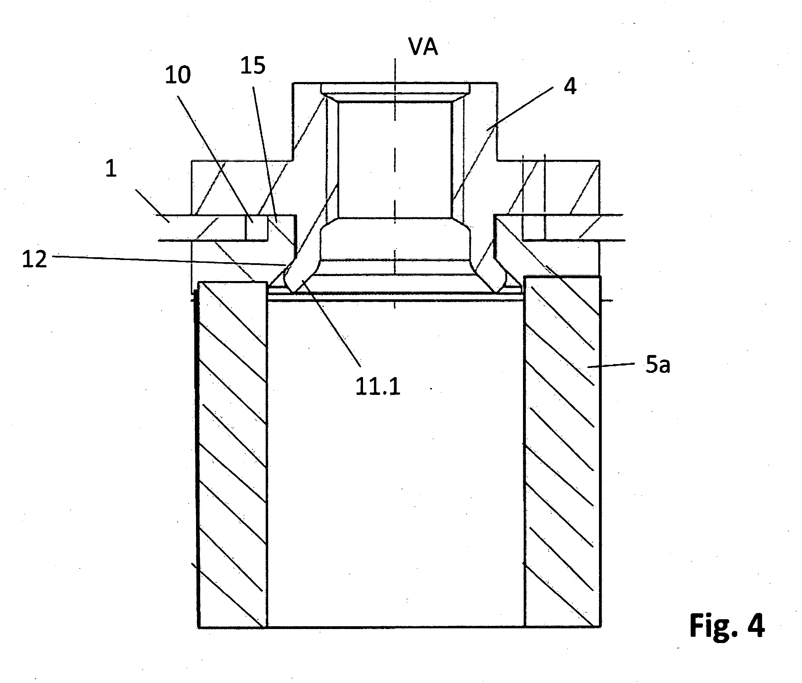

Vorstehend wurde davon ausgegangen, dass mit der Befestigungsvorrichtung 3 eine axiale Einstellung des Abstandes H sowie ein axialer Toleranzausgleich möglich ist. Die Figur 4 zeigt in vereinfachter Darstellung die von einer Spannmutter 4a und der Gewindehülse 5 gebildete Anordnung, die zugleich auch einen radialen Toleranzausgleich, d.h. einen Toleranzausgleich radial zur Achse AV ermöglicht. Hierfür reicht die Gewindehülse 5a mit einem Bund oder Abschnitt 15 in die Fügeöffnung 10 hinein. Der Abschnitt 15 besitzt eine von der Kreisform abweichende Umfangskontur, beispielsweise eine quadratische Umfangskontur. Analog hierzu ist auch die Fügeöffnung 10 mit einem von der Kreisform abweichenden Querschnitt, beispielsweise mit einem quadratischen Querschnitt ausgebildet, dessen Querschnittsseiten aber etwas größer sind als die Querschnittsseiten der Umfangsfläche des Abschnittes 15, sodass eine Verlagerung der Gewindehülse 5 mit der Spannmutter 4 in der Ebene senkrecht zur Achse VA und damit der radiale Toleranzausgleich möglich sind. Durch den von der Kreisform abweichenden Querschnitt der Fügeöffnung 10 und die ebenfalls von der Kreisform abweichende Umfangskontur des Abschnittes 15 ist gewährleistet, dass sich die Spannmutter 4 beim Verspannen der Bauteile 1 und 2 mit dem Gewindebolzen 8 nicht mitdrehen kann. Bevorzugt ist die Höhe, die der Bund oder Abschnitt 15 in Richtung der Achse VA aufweist etwas größer als die Dicke des das Bauteil 1 bildenden Blechs, so dass am Bauteil 1 befestigter Spannmutter 4 und Gewindehülse 5a (wiederum durch den verformten Nietbund 11.1) ein Verschieben der Spannmutter 4 der Gewindehülse 5a für den seitlichen oder radialen Toleranzausgleich möglich ist. Die die Bauteile 1 und 2 miteinander verspannende Kräfte wirken wiederum ausschließlich über den Gewindebolzen 8, die Spannmutter 4 und den von der Gewindehülse 5a und der Trommelmutter 6 gebildeten starren Abstandhalter.

Die Figur 5 zeigt eine Mutteranordnung 16, die einen seitlichen oder radialen Toleranzausgleich ermöglicht und aus einer Spannmutter 4a und einem Haltering 17 besteht, der im Bereich der Fügeöffnung 10 in gleicher Weise durch den verformten Nietbund 11.1 der Spannmutter gehalten ist, wie dies vorstehend für die Gewindehülse 5 bzw. 5a beschrieben wurde. Der Haltering 17 weist ebenfalls den vom verformten Nietbund 11.1 hintergriffenen Hinterschnitt 12 und den Bund oder Abschnitt 15 auf, der in die Fügeöffnung 10 hineinreicht und die von der Kreisform abweichende Umfangskontur aufweist. Ebenso ist die Fügeöffnung 10 mit dem von der Kreisform abweichenden Querschnitt ausgeführt, der wiederum größer ist als der Außenquerschnitt des Abschnitts 15, sodass ein Toleranzausgleich radial zu der Achse VA möglich ist. Wie die Figur 5 auch zeigt, ist das Bauteil 1 im Bereich der Spannmutteranordnung 16 mit einem domartigen Abschnitt 1.1 ausgebildet, und zwar derart, dass der Haltering 17 vollständig in der konkaven Seite des domartigen Abschnitts 1.1 aufgenommen ist und nicht über diejenige Ebene vorsteht, in der die der Spannmutter 4 abgewandte Unterseite des Bauteils 1 außerhalb des domartigen Abschnittes 1.1 angeordnet ist. Weiterhin ist das Bauteil 1 in einem die Fügeöffnung 10 umgebenden Bereich des domartigen Abschnitts 1.1 zwischen der Spannmutter 4a oder einem flanschartigen Abschnitt 4a.1 dieser Mutter und dem Haltering aufgenommen.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrundeliegende Erfindungsgedanke verlassen wird. So kann in gleicher Weise wie die Spannmutter 4a auch ein anderes mit dem Nietbund 11 versehenes Funktions- oder Verbindungselement am Bauteil 1 mit einem radialen Toleranzausgleich befestigt werden.

### Bezugszeichenliste

- 1,2: Bauteil
- 1.1: domartiger Abschnitt
- 3: Befestigungsvorrichtung
- 4, 4a: Spannmutter
- 5, 5a: Gewindehülse
- 5.1: Innengewinde
- 6: Trommelmutter
- 7: Abstandhalter
- 8: Gewinde- oder Spannbolzen
- 8.1: Bolzenkopf
- 9: Mitnehmerhülse
- 10: Fügeöffnung
- 11: Nietbund
- 12: Hinterschnitt
- 13: Werkzeug
- 14: Öffnung
- 15: Abschnitt oder Bund
- 16: Spannmutteranordnung
- 17: Haltering
- VA: Achse der Vorrichtung 3

## Patentansprüche

1. Verfahren zum Befestigen eines Funktionselementes, beispielsweise eines Verbindungselementes, z.B. in Form einer Mutter (4) oder eines Gewindebolzens an einer in einem Bauteil (1) aus einem Flachmaterial, beispielsweise metallischen Flachmaterial oder Stahlblech vorgesehenen Fügeöffnung (10) durch bleibendes Verformen eines am Funktionselement vorgesehenen, das Bauteil (1) im Bereich der Fügeöffnung (10) durchgreifenden Nietbundes (11) in einen verformten Nietbund (11.1),
**dadurch gekennzeichnet,**
**dass** für einen seitlichen oder radialen Toleranzausgleich an der dem Funktionselement (4) abgewandten Seite des Bauteils (1) ein Haltering (17) vorgesehen wird, der mit einem Abschnitt oder Bund (15) in die Fügeöffnung (10) hineinreicht und der in einer Ringöffnung einen Hinterschnitt (12) bildet, dass der in die Ringöffnung des Halterings (17) eingeführte Nietbund (11) in den den Hinterschnitt (12) hintergreifenden Nietbund (11.1) verformt wird, und dass die Fügeöffnung (10) mit einem Querschnitt hergestellt wird, der größer ist als der Außenquerschnitt des in die Fügeöffnung hineinreichenden Abschnitts (15) des Halterings (17).

2. Verfahren nach Anspruch 1, **dadurch gekennzeichnet, dass** die Fügeöffnung (10) einen von der Kreisform abweichenden Querschnitt und der in die Fügeöffnung (10) hineinreichende Abschnitt (15) eine von der Kreisform abweichende Umfangskontur aufweisen.

3. Verfahren nach Anspruch 1 oder 2, **dadurch gekennzeichnet, dass** der Abschnitt (15) in einer Achsrichtung parallel zur Achse der Fügeöffnung eine Höhe aufweist, die größer ist als die Wandstärke, die das Bauteil (1) in dem die Fügeöffnung (10) umgebenden und zwischen dem Funktionselement (4a) und dem Haltering (17) aufgenommenen Bereich aufweist.

4. Verfahren nach einem der Ansprüche 1 bis 3, **dadurch gekennzeichnet, dass** das Bauteil (1) im Bereich der Fügeöffnung (10) mit einem domartigen Abschnitt (1.1) ausgebildet wird, der an seiner konkaven Seite den Haltering (17) zumindest teilweise aufnimmt.

## Claims

1. A method for fastening a functional element, for example a connection element, e.g., in the form of a nut (4) or threaded bolt, to a joint opening (10) provided in a component (1) made of a planar material, for example a metal planar material or steel sheet, by permanently deforming a rivet collar (11) provided on the functional element and passing through the component (1) in the region of the joint opening (10) into a deformed rivet collar (11.1),
**characterized in**
**that** a retaining ring (17) is provided on the side of the component (1) facing away from the functional element (4) for a lateral or radial tolerance compensation, which retaining ring (17) extends with a section or collar (15) into the joint opening (10) and forms an undercut (12) in a ring opening,
**that** the rivet collar (11) introduced into the ring opening of the retaining ring (17) is deformed into the rivet collar (11.1) engaging behind the undercut (12),
and **that** the joint opening (10) is produced with a cross section that is larger than the outer cross section of the section (15) of the retaining ring (17) that extends into the joint opening.

2. Method according to claim 1, **characterized in that** the joint opening (10) has a cross section that deviates from the circular form and the section (15) extending into the joint opening (10) has a peripheral contour that deviates from the circular form.

3. Method according to claim 1 or 2, **characterized in that** the section (15) has, in an axial direction parallel to the axis of the joint opening, a height that is greater than the wall thickness that the component (1) has in the region surrounding the joint opening (10) and received between the functional element (4a) and the retaining ring (17).

4. Method according to any one of claims 1 to 3, **characterized in that** the component (1) is configured, in the region of the joint opening (10), with a dome-like section (1.1) that at least partially receives the retaining ring (17) on its concave side.

## Revendications

1. Procédé, destiné à fixer un élément fonctionnel, par exemple un élément d'assemblage, par exemple sous la forme d'un écrou (4) ou d'un boulon fileté sur un orifice d'assemblage (10) prévu dans un élément structurel (1) en une matière plate, par exemple en une matière métallique plate ou en une tôle d'acier, par déformation permanente en un collet de butée (11.1) déformé d'un collet de butée (11) prévu sur l'élément fonctionnel, traversant l'élément structurel (1) dans la zone de l'orifice d'assemblage (10),
**caractérisé**
**en ce que**, pour une compensation latérale ou radiale des tolérances, il est prévu sur le côté de l'élément structurel (1) qui est détourné de l'élément fonctionnel (4) une bague de retenue (17), qui par un segment ou un collet (15) arrive à l'intérieur de l'orifice d'assemblage (10) et qui dans un orifice annulaire forme une contre-dépouille (12),
**en ce qu'**on déforme le collet de butée (11) introduit dans l'orifice annulaire de la bague de retenue (17) pour obtenir le collet de butée (11.1) s'engageant par l'arrière dans la contre-dépouille (12)
et **en ce que** l'on créé l'orifice d'assemblage (10) avec une section transversale qui est supérieure à la section transversale extérieure du segment (15) de la bague de retenue (17) qui arrive à l'intérieur de l'orifice d'assemblage.

2. Procédé selon la revendication 1, **caractérisé en ce que** l'orifice d'assemblage (10) présente une section transversale divergeant de la forme circulaire et **en ce que** le segment (15) qui arrive à l'intérieur de l'orifice d'assemblage (10) présente un contour périphérique divergeant de la forme circulaire.

3. Procédé selon la revendication 1 ou 2, **caractérisé en ce que** le segment (15) présente dans une direction axiale qui est parallèle à l'axe de l'orifice d'assemblage une hauteur qui est supérieure à l'épaisseur de paroi que présente l'élément structurel (1) dans la zone entourant l'orifice d'assemblage (10) et réceptionnée entre l'élément fonctionnel (4a) et la bague de retenue (17).

4. Procédé selon l'une quelconque des revendications 1 à 3, **caractérisé en ce que** dans la zone de l'orifice d'assemblage (10), on conçoit l'élément structurel (1) avec un segment (1.1) en forme de dôme, qui sur son côté concave réceptionne au moins partiellement la bague de retenue (17).
